# EUROPEAN PATENT SPECIFICATION

(11) **EP 3 326 273 B1**
(45) Date of publication and mention of the grant of the patent: **31.08.2022**
(21) Application number: 16744539.4
(22) Date of filing: 18.07.2016
(51) Int. Cl.: H02K 11/21, H02K 11/33, H02K 37/14, H02K 7/116

(54) **ELECTRICAL ACTUATOR WITH INTEGRATED POSITION ENCODER**
ELEKTRISCHER AKTUATOR MIT INTEGRIERTEM POSITIONSGEBER
ACTIONNEUR ÉLECTRIQUE AVEC UN CODEUR DE POSITION INTÉGRÉ

(30) Priority: 21.07.2015 EP 15177773
(43) Date of publication of application: 30.05.2018
(73) Proprietor: Société Industrielle de Sonceboz S.A., 2605 Sonceboz (CH)
(72) Inventor: NIKLAUS, Joël, 2504 Bienne (CH); DE OLIVEIRA DANIEL, Dominique, 90140 Brebotte (FR)
(74) Representative: reuteler & cie SA
(86) International application number: PCT/IB2016/054268
(87) International publication number: WO 2017/013571

(56) References cited:
- EP-A1- 0 313 046
- US-A- 5 100 271
- US-A1- 2008 022 783
- US-A1- 2014 159 516
- US-B2- 7 591 448

## Description

The present invention relates to an electrical actuator having an electrical motor with a position encoder. The electrical motor may for instance be a stepper motor.

Electrical actuators may be used in many applications for the displacement of an organ, the position of which should be controlled. Many actuators comprise position sensing means that may be provided in a variety of configurations. One of the widely used position sensing means comprises an encoder disk that is coupled to the rotor of the motor, either directly or in an element of a transmission coupled to the rotor. Encoders may have optical or magnetic discrete elements positioned on a rim of a disk, the passage of the discrete elements being sensed by a corresponding sensor on a static structure of the motor or actuator. In certain motors, position is controlled without an encoder, for instance in stepper motors by counting the steps from an initial position. In certain applications, the presence of an encoder, despite the motor's ability to determine the position, may be required or advantageous for greater accuracy, safety or reliability. Typically, an encoder disk is a separate component that is mounted externally to the motor, however a disadvantage is the increased dimensions of the actuator, in particular increased height in direction of the axis of the motor due to the added on encoder. This could potentially be overcome by positioning the encoder offset from the rotor axis, for example in a gear that is coupled to the rotor, however this increases the complexity and may also decrease the resolution of the encoder if the coupled disk is not geared in a one-to-one ratio with the axis.

In certain applications, the height of the actuator is of importance, for instance in applications where the actuators are stacked one next to the other, for instance actuators used in hydraulic valve commands. Hydraulic drive systems are used in many mechanical load applications, for example in construction equipment, farming equipment, fork lifts, cranes and other hydraulically driven work systems. Hydraulic pistons driving an associated mechanical organ are controlled by valves controlling the flow of hydraulic fluid through a pump line and a return line, in order to fill or to empty the hydraulic piston. The degree of opening and closing of the pump line, respectively return line control valves, determines the rate of displacement and position of the associated mechanical load member. It is therefore important to ensure accuracy in the opening and closing of the control valves and to reduce sensitivity of the control valve opening to pressure in the hydraulic system. The use of a stepping motor to actuate a valve rod is advantageous in view of the high rigidity it confers to the hydraulic valve control system as well as enabling high precision in the opening and closing of the valves through control of the stepping motor, such a system being described in US 7,591,448.

In US2008/022783, an electrical motor having a position encoder disk positioned between the rotor body and a rotor bearing is disclosed. Additional relevant prior art is disclosed in EP 0313046 A1, US 2014/159516 A1 and US 5100271 A.

It is an object of this invention to provide an actuator with an electrical motor comprising a position encoder, that is compact, reliable and cost effective to manufacture.

It is advantageous to provide an actuator with an electrical motor having an encoder with a high resolution for accurate position sensing.

It is advantageous to provide an actuator with an electrical motor having a position encoder that generates an easy to read signal.

Objects of the invention have been achieved by providing an actuator according to claim 1.

Disclosed herein is an electrical actuator comprising a housing, a signal processing circuit, an encoder portion comprising an encoder disk, and a motor portion. The motor portion comprises a stator with electric coils and a rotor comprising a rotor body and shaft rotatably supported by rotor bearings. The encoder disk is positioned around the shaft adjacent the rotor body and mounted between one of the rotor bearings and the rotor body.

According to a first aspect of the invention, the encoder disk comprises a rim at a periphery of the disk, and a center support portion connecting the rim to the shaft of the rotor, the rim comprising position elements configured for being read by the encoder position sensor. The center support portion is offset in an axial direction, which is defined by an axis of rotation of the rotor, with respect to the rim such that the rotor bearing is positioned at least partially within said offset of said encoder disk.

In an embodiment, the signal processing circuit comprises a circuit board positioned at an axial end of the rotor adjacent the encoder disk, and an encoder position sensor mounted on a side of the circuit board facing the rotor body.

In an embodiment, the circuit board comprises a rotor bearing orifice configured to allow insertion of the rotor bearing and rotor shaft therethrough.

In an advantageous embodiment, the stator comprises a dielectric support on which the electric coils are wound, the stator being fixed to the housing and connection ends of the coils being connected to the circuit board.

In an advantageous embodiment, the rim is provided with alternatingly polarized magnetic segments distributed around the rim and the encoder position sensor comprises a magnetic field detector.

In a variant, the encoder rim may comprise optically readable markings and the encoder position sensor may comprise a light transmitter and optical receiver.

In an embodiment, the housing comprises a base portion and a cover portion, the base portion comprising a base wall and side walls upstanding therefrom, the side walls extending to a top edge against which the cover portion is mountable to enclose the signal processing circuit. The circuit board of the signal processing circuit may advantageously be positioned adjacent the top edge, distal from the base wall.

In an advantageous embodiment, the base wall and cover portion comprise bearing mounting portions integrally formed with the base portion and cover portion configured for mounting the rotor bearings therein.

In an advantageous embodiment, the actuator further includes a transmission portion coupled to the rotor with gear wheels mounted inside the housing.

In an embodiment, the actuator is configured to drive a linear rack mechanism for a hydraulic valve actuator.

In an advantageous embodiment, the motor portion is a stepper motor.

Further objects and advantageous features of the invention will be apparent from the claims, from the detailed description, and annexed drawings, in which:
Figure 1 is a cross-sectional view through an actuator according to an embodiment of this invention;

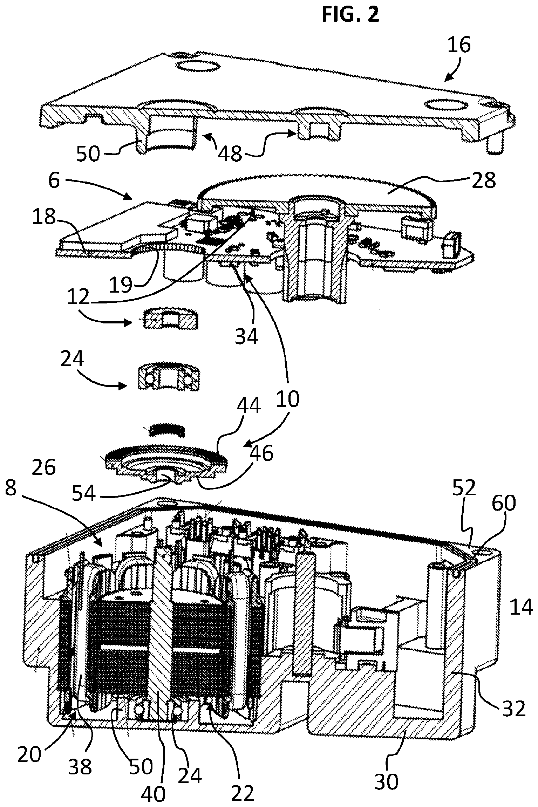

Figure 2 is a cross-sectional exploded view of the actuator shown in figure 1.

Referring to the figures, an actuator 2 comprises a housing 4, and a signal processing circuit 6, and motor portion 8 mounted in the housing 4. The actuator may further comprise a transmission portion 12 coupled to the motor to provide a transmission output of the actuator. The transmission may for instance comprise one or more gear wheels 28 coupled to a pinion mounted on the rotor 22 of the motor portion 8. The transmission portion 12 may have various configurations depending on the intended use of the actuator, for instance the gear wheels may be coupled to a rack tooth for a linear transmission output. In the specific embodiment illustrated, one of the main uses of the actuator is for control of a hydraulic valve system, a plurality of actuators being stacked one next to the other in the axial direction A in order to control a plurality of hydraulic valves. Such hydraulic valves may be used in the command of various hydraulically operated machines, such as found in construction machines and agricultural machines.

In such applications, the height of the actuator H must be as compact as possible, or at least within a pre-defined maximum specified value in order to enable the actuators to be stacked together and actuate a plurality of valves arranged at a certain predefined spacing. The height H of the actuator 2 is determined principally by the height of the motor portion 8 as measured in the axial direction A corresponding to the axis of rotation.

The transmission portion 12 may in particular be in the form of a reduction gear mechanism coupled to a linear rack (not shown) that is coupled to the spool of a valve control of the hydraulic system.

In the embodiment shown, the housing comprises a base portion 14 with a base wall 30 and side-walls 32 upstanding therefrom to a top edge 52, and a cover portion 16 to close the various components mounted in the housing once assembled within the base portion 14. The cover portion 16 may rest against the top edge 52 that may for instance be provided with a sealing groove with a seal 60 mounted therein to hermetically seal the cover to the base portion, the housing and cover portion may however have various other designs configured to enclose and protect the motor and signal processing circuit and other components within the housing.

The housing base portion and cover portions may be provided with various positioning and mounting structures 48 such as bearing mounting portions 50 that position and fix the bearings and other components within the housing and relative to each other.

The signal processing circuit 6 comprises a circuit board 18 on which various electrical and electronic components are mounted, at least some of these components including a control system for controlling the motor portion 8 and for providing interconnection with power supply and control signal connections to external circuitry. The circuit board 18 is advantageously positioned adjacent one of the walls of the housing, in the present embodiment adjacent the cover portion 16 at a top edge 52 of the base portion 14.

A connector (not shown) for connection to external circuitry may be provided through the housing on any of the side, base or cover walls depending on the intended application and the positioning of the actuator in external machinery.

The motor portion 8 may in a preferred embodiment be in the form of a stepper motor portion comprising a rotor 22 and a stator 20 comprising electrical coils 38 to drive the rotor. Various stepping motor configurations may be employed, whereby in the embodiment illustrated the stepping motor comprises an axially polarized magnet 39 in a stack comprising sheets 54 of magnetic material such as a soft iron, built up to form the rotor, and the outer circumference of the rotor is provided with a plurality of teeth 56 that cooperate with teeth of a magnetic circuit of the stator to generate the steps of the stepping motor. The principle of such rotor and stator construction for stepping motors is *per* se well-known and need not be described in detail herein. The stepping motor may have other *per* se known rotor-stator configurations, for instance comprising a magnet that has alternating polarity magnetic segments around the rotor's circumference that interact with the magnetic poles of the stator.

The rotor is mounted on a shaft 40, the ends 41a, 41b of the shaft being mounted in bearings 24a, 24b that rotatingly support and axially position the rotor. The bearings 24a, 24b are fixed in the housing 4, in particular in bearing mounting portions 50a, 50b in the base wall and cover portions of the housing. It may be however be noted that other support structures may be provided for mounting the bearings, for instance coupled to the side walls and not necessarily mounted in the housing base wall and cover portion, or in components that are not integrally formed with the housing or cover portion but mechanically fixed thereto.

The circuit board 18 is mounted against an axial end of the stator 20 whereby connection ends of the coils of the stator are electrically connected to the circuit board, for instance by welding or soldering or in press fit or other *per* se known connection means.

In an advantageous embodiment, the coils 38 may be wound on a dielectric support 21 and comprise connection terminals mounted in the dielectric support, the stator coils being mounted and connected to the circuit board 18 prior to assembly of the circuit board in the housing base 14. The stator on the circuit board may be mounted in the housing after insertion of the rotor in the housing or mounted first in the housing, then the rotor, and after the circuit board is fixed on the housing and the coils are connected to the circuit board. The circuit board may be mounted over the stator coils after insertion of the coils in the housing, the connection between the stator coils and the circuit board being performed once the circuit board and stator coils are assembled in the housing base 14.

The circuit board 18 comprises a rotor bearing orifice 19 to allow the rotor shaft 40 and rotor bearing 24b to extend therethrough. In an advantageous embodiment, the rotor bearing orifice 19 has a diameter configured to accommodate the bearing mounting portion 50b therethrough. This configuration allows the circuit board 18 to be positioned close to the cover portion 16 and to reduce the overall height H of the actuator.

The actuator further comprises an encoder portion 10 comprising an encoder disk 26 that is mounted on the rotor 22 and an encoder position sensor or counter 34 that is statically mounted on the PCB with respect to the housing and configured to sense the rotational or angular position of the encoder disk, or configured to measure the angular rotation of the encoder disk. The encoder disk 26 comprises a rim 44 disposed around a center support portion 46 with an orifice 58 fixedly mounted to the rotor shaft 40. The encoder disk 26 thus turns with the rotor shaft.

Encoding elements on the rim 44 may be in the form of magnetic polarized segments, in which case the encoder position sensor comprises one or more magnetic field detectors that for instance count the passage of the magnetic segments. In a variant, the encoder disk may comprise optical markings or elements that are picked up by an optical detector. Other angular position sensing means that are *per* se known for encoding disks may also be employed in the present invention. The encoding means may comprise an absolute sensor that measures the absolute angular position of the encoder with respect to a static reference, or may be a relative encoding means that measures the angular displacement of the encoder disk, whereby at the start of the motor an initial position may be determined to fix the reference point. The encoder disk may also comprise a reference position that, for instance, allows to set a reference point or to count the number of revolutions or to verify the position of the encoder disk.

In preferred embodiments, the rim 44 of the encoder disk comprises optically or magnetically readable segments that may be read with an optical, respectively magnetic, sensor mounted on a side 18a of the circuit board facing the motor portion 8.

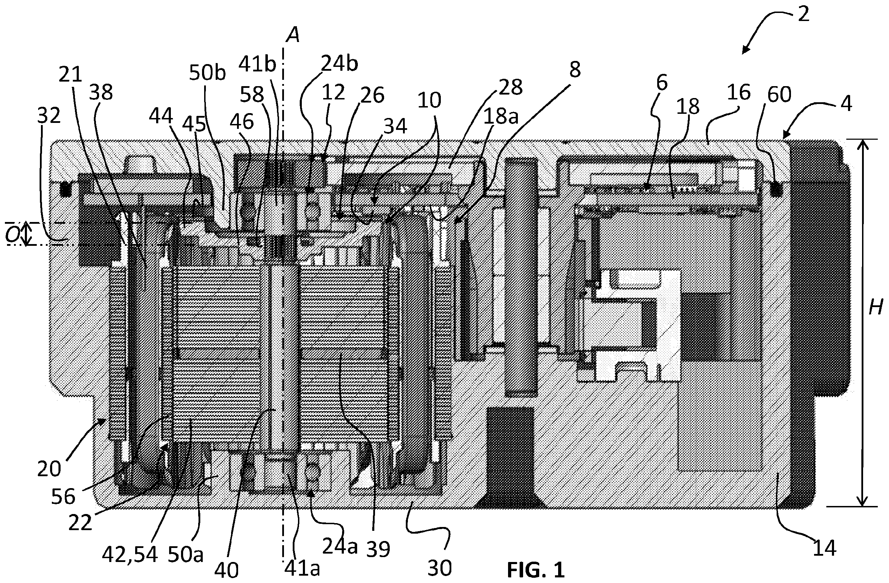

The encoder disk 26 comprises an orifice 58 that is inserted over the shaft 40 of the rotor 22 such that the center support portion 46 is adjacent the rotor body 42. The rotor bearing 24b is mounted adjacent a side of the center support portion 46 of the encoded disk 26 opposite the rotor body 42. The center support portion of the encoded disk 26 is axially offset *O* with respect to the encoded surface 45 of the rim 44 such that the encoded disk forms a cup shape within which at least a portion of the rotor bearing 24a is positioned. This allows the encoded surface of the rim 44 to be positioned close to the circuit board 18 and in particular to the position sensor 34 mounted directly on the circuit board. The center portion 46 offset *O* from the rim 44 may be of sufficient depth such that the bearing is positioned completely within the cup shape resulting from this cup shape below the encoded surface of the rim. The offset may also be of a lesser depth whereby the rotor bearing is only partially positioned within the cup and projects beyond the encoded surface as illustrated in the embodiment of figure 1.

A particularly compact height in the axial direction A is thus achieved. The arrangement of an encoder disk 26 on the rotor body 42, between the rotor bearings 24a, 24b, while allowing the rim 44 of the encoder disk to be accessed by the position sensor 34 positioned on a circuit board that may also comprise components for control of the motor, enables the realization of a particularly compact and cost effective arrangement.

In a variant that is not enclosed in the claims, the encoder disk may be an essentially planar disk without an offset center support portion 46 relative to the rim 44, in which case the encoder position sensor or counter 34 may be configured to read the encoder surface on the rim 44 either at a greater distance, for instance if optical means are used, or by extending a magnetic sensing element from the circuit board to a position close to the encoded surface either by an extension of the sensor from the circuit board, or if the sensor is mounted in another arrangement in the housing, adjacent the encoded surface of the rim 44.

### List of references in the drawings:

Actuator 2
housing 4
   base portion 14
      base wall 30
         positioning and mounting structures 48
         bearing mounting portions 50
      side walls 32
         base portion top edge 52
            seal 60 cover portion 16
         positioning and mounting structures 48
         bearing mounting portions 50, 50a, 50b signal processing circuit 6 circuit board 18
      side 18a of the circuit board facing the motor portion 8
      rotor bearing orifice 19
      encoder position sensor or counter 34
      controller 36
motor portion (stepping motor portion) 8
   stator 20
      electric coils 38
      dielectric support 21
   rotor 22
      shaft 40
         ends 41a, 41b of the shaft
      rotor body 42
         stacked sheets 54
         magnet 39
         teeth 56
   bearings 24, 24a, 24b
encoder portion 10
   encoder disk 26
      rim 44
         encoded surface 45
      center support portion 46
         orifice (for rotor axis) 58 transmission portion 12
   motor pinion
   gearwheels 28
overall height H of the actuator
   axial offset *O* of center support portion with respect to the encoded surface 45 of the rim 44

## Claims

1. Actuator (2) comprising a housing (4), a signal processing circuit (6), an encoder portion (10) comprising an encoder disk (26), and a motor portion (8) comprising a stator (20) with electric coils (38) and a rotor (22) comprising a rotor body (42) and shaft (40) rotatably supported by rotor bearings (24a, 24b) at opposite ends (41a, 41b) of the shaft, the encoder disk (26) being positioned around the shaft (40) adjacent the rotor body (42) and sandwiched between one of the rotor bearings (24b) and the rotor body, the encoder disk (26) comprising a rim (44) at a periphery of the disk (26), and a center support portion (46) connecting the rim to the shaft (40) of the rotor (22), the rim (44) comprising position elements configured for being read by the encoder position sensor (34), **characterized in that** the center support portion (46) is offset in a axial direction (A) defined by an axis of rotation of the rotor (22), with respect to the rim (44) such that the rotor bearing (24b) is positioned at least partially within said offset of said encoder disk (26).

2. Actuator according to claim 1, wherein the signal processing circuit (6) comprises a circuit board (18) positioned at an axial end of the rotor (22) adjacent the encoder disk (26), an encoder position sensor (34) being mounted on a side (18a) of the circuit board (18) facing the rotor body (42).

3. Actuator according to the preceding claim, wherein the circuit board (18) comprises a rotor bearing orifice (19) configured to allow insertion of the rotor bearing and rotor shaft (40) therethrough.

4. Actuator according to either of the two directly preceding claims, wherein the stator (20) comprises a dielectric support (21) on which the electric coils (38) are wound, the stator (20) being fixed a housing base portion (14) and connection ends of the coils (38) being connected to the circuit board (18).

5. Actuator according to any preceding claim, wherein the rim (44) is provided with alternatingly polarized magnetic segments distributed around the rim (44) and the encoder position sensor (34) comprises a magnetic field detector.

6. Actuator according to any of claims 1-4, wherein the encoder rim (44) comprises optically readable markings and the encoder position sensor (34) comprises a light transmitter and optical receiver.

7. Actuator according to any of the preceding claims, wherein the housing (4) comprises a base portion (14) and a cover portion (16), the base portion comprising a base wall (30) and side walls (32) upstanding therefrom, the side walls extending to a top edge (52) against which the cover portion (16) is mountable to enclose the signal processing circuit (6), wherein a circuit board (18) of the signal processing circuit (6) is positioned adjacent the top edge, distal from the base wall (30).

8. Actuator according to the preceding claim, wherein the base wall (30) and cover portion (16) comprise bearing mounting portions (50, 50a, 50b) integrally formed with the base portion (14) and cover portion (16) configured for mounting the rotor bearings (24a, 24b) therein

9. Actuator according to any of the preceding claims further including a transmission portion (12) with gear wheels (28) mounted inside the housing (4).

10. Actuator according to any of the preceding claims, wherein the motor portion (8) is a step motor.

11. Actuator according to the preceding claim configured to drive a linear rack mechanism for a hydraulic valve actuator.

## Patentansprüche

1. Aktuator (2), der ein Gehäuse (4), eine Signalverarbeitungsschaltung (6), einen Codiererabschnitt (10), der eine Codiererscheibe (26) umfasst, und einen Motorabschnitt (8), der einen Stator (20) mit elektrischen Spulen (38) und einen Rotor (22), der einen Rotorkörper (42) und eine Welle (40) umfasst, die drehbar von Rotorlagern (24a, 24b) an gegenüberliegenden Enden (41a, 41b) der Welle gestützt wird, umfasst, wobei die Codiererscheibe (26) dem Rotorkörper (42) benachbart um die Welle (40) positioniert und zwischen einem der Rotorlager (24b) und dem Rotorkörper eingeschlossen ist, wobei die Codiererscheibe (26) an einer Peripherie der Scheibe (26) einen Rand (44) umfasst und wobei ein mittlerer Stützabschnitt (46) den Rand mit der Welle (40) des Rotors (22) verbindet, wobei der Rand (44) Positionselemente umfasst, die dazu ausgelegt sind, vom Codiererpositionssensor (34) gelesen zu werden, **dadurch gekennzeichnet, dass** der mittlere Stützabschnitt (46) in einer Axialrichtung (*A*), die durch eine Drehachse des Rotors (22) definiert wird, mit Bezug auf den Rand (44) versetzt ist, derart, dass das Rotorlager (24b) mindestens teilweise innerhalb des Versatzes der Codiererscheibe (26) positioniert ist.

2. Aktuator nach Anspruch 1, wobei die Signalverarbeitungsschaltung (6) eine Leiterplatte (18) umfasst, die an einem axialen Ende des Rotors (22) der Codiererscheibe (26) benachbart positioniert ist, wobei ein Codiererpositionssensor (34) auf einer Seite (18a) der Leiterplatte (18) montiert ist, die dem Rotorkörper (42) zugewandt ist.

3. Aktuator nach dem vorhergehenden Anspruch, wobei die Leiterplatte (18) eine Rotorlageröffnung (19) umfasst, die dazu ausgelegt ist, das Einstecken des Rotorlagers und der Rotorwelle (40) dadurch zu erlauben.

4. Aktuator nach einem der zwei unmittelbar vorhergehenden Ansprüche, wobei der Stator (20) eine dielektrische Stütze (21) umfasst, auf die die elektrischen Spulen (38) gewickelt sind, wobei der Stator (20) in einem Gehäusebasisabschnitt (14) befestigt ist und wobei Verbindungsenden der Spulen (38) mit der Leiterplatte (18) verbunden sind.

5. Aktuator nach einem der vorhergehenden Ansprüche, wobei der Rand (44) mit abwechselnd polarisierten magnetischen Segmenten versehen ist, die um den Rand (44) verteilt sind, und der Codiererpositionssensor (34) einen Magnetfelddetektor umfasst.

6. Aktuator nach einem der Ansprüche 1-4, wobei der Codiererrand (44) optisch lesbare Markierungen umfasst und der Codiererpositionssensor (34) einen Lichtsender und einen optischen Empfänger umfasst.

7. Aktuator nach einem der vorhergehenden Ansprüche, wobei das Gehäuse (4) einen Basisabschnitt (14) und einen Abdeckungsabschnitt (16) umfasst, wobei der Basisabschnitt eine Basiswand (30) und Seitenwände (32), die davon hochstehen, umfasst, wobei sich die Seitenwände zu einer Oberkante (52) erstrecken, an die der Abdeckungsabschnitt (16) montierbar ist, um eine Signalverarbeitungsschaltung (6) zu umschließen, wobei eine Leiterplatte (18) der Signalverarbeitungsschaltung (6) der Oberkante benachbart distal von der Basiswand (30) positioniert ist.

8. Aktuator nach dem vorhergehenden Anspruch, wobei die Basiswand (30) und der Abdeckungsabschnitt (16) Lagermontageabschnitte (50, 50a, 50b) umfassen, die integral mit dem Basisabschnitt (14) und dem Abdeckungsabschnitt (16) gebildet und zum Montieren der Rotorlager (24a, 24b) darin ausgelegt sind.

9. Aktuator nach einem der vorhergehenden Ansprüche, der ferner einen Getriebeabschnitt (12) mit Zahnrädern (28) umfasst, der im Gehäuse (4) montiert ist.

10. Aktuator nach einem der vorhergehenden Ansprüche, wobei der Motorabschnitt (8) ein Schrittmotor ist.

11. Aktuator nach dem vorhergehenden Anspruch, der dazu ausgelegt ist, einen linearen Zahnstangenmechanismus für einen Hydraulikventilaktuator anzutreiben.

## Revendications

1. Actionneur (2) comprenant un boîtier (4), un circuit de traitement de signal (6), une partie d'encodeur (10) comprenant un disque d'encodeur (26), et une partie de moteur (8) comprenant un stator (20) avec des bobines électriques (38) et un rotor (22) comprenant un corps de rotor (42) et un arbre (40) supportés en rotation par des paliers de rotor (24a, 24b) sur des extrémités (41a, 41b) opposées de l'arbre, le disque d'encodeur (26) étant positionné autour de l'arbre (40) adjacent au corps de rotor (42) et pris en sandwich entre l'un des paliers de rotor (24b) et le corps de rotor, le disque d'encodeur (26) comprenant un bord (44) au niveau d'une périphérie du disque (26) et une partie de support centrale (46) raccordant le bord à l'arbre (40) du rotor (22), le bord (44) comprenant des éléments de position configurés pour être lus par le capteur de position d'encodeur (34), **caractérisé en ce que** la partie de support centrale (46) est décalée dans une direction axiale (A) définie par un axe de rotation du rotor (22), par rapport au bord (44) de sorte que le palier de rotor (24b) est positionné au moins partiellement dans ledit décalage dudit disque d'encodeur (26).

2. Actionneur selon la revendication 1, dans lequel le circuit de traitement de signal (6) comprend une carte de circuit imprimé (18) positionnée au niveau d'une extrémité axiale du rotor (22) adjacent au disque d'encodeur (26), un capteur de position d'encodeur (34) étant monté sur un côté (18a) de la carte de circuit imprimé (18) faisant face au corps de rotor (42) .

3. Actionneur selon la revendication précédente, dans lequel la carte de circuit imprimé (18) comprend un orifice de palier de rotor (19) configuré pour permettre l'insertion du palier de rotor et l'arbre de rotor (40) à travers ce dernier.

4. Actionneur selon l'une ou l'autre des deux revendications immédiatement précédentes, dans lequel le stator (20) comprend un support diélectrique (21) sur lequel les bobines électriques (38) sont enroulées, le stator (20) étant fixé dans une partie de base de boîtier (14) et les extrémités de connexion des bobines (38) étant raccordées à la carte de circuit imprimé (18).

5. Actionneur selon l'une quelconque des revendications précédentes, dans lequel le bord (44) est prévu avec des segments magnétiques polarisés de manière alternée répartis autour du bord (44) et le capteur de position d'encodeur (34) comprend un détecteur de champ magnétique.

6. Actionneur selon l'une quelconque des revendications 1 à 4, dans lequel le bord d'encodeur (44) comprend des marquages lisibles par voie optique et le capteur de position d'encodeur (34) comprend un émetteur de lumière et un récepteur optique.

7. Actionneur selon l'une quelconque des revendications précédentes, dans lequel le boîtier (4) comprend une partie de base (14) et une partie de couvercle (16), la partie de base comprenant une paroi de base (30) et des parois latérales (32) qui se dressent à partir de cette dernière, les parois latérales s'étendant vers un bord supérieur (52) contre lequel la partie de couvercle (16) peut être montée pour enfermer le circuit de traitement de signal (6), dans lequel une carte de circuit imprimé (18) du circuit de traitement de signal (6) est positionnée de manière adjacente au bord supérieur, à distance de la paroi de base (30).

8. Actionneur selon la revendication précédente, dans lequel la paroi de base (30) et la partie de couvercle (16) comprennent des parties de montage de palier (50, 50a, 50b) formées de manière solidaire avec la partie de base (14) et la partie de couvercle (16) configurée pour monter les paliers de rotor (24a, 24b) à l'intérieur de cette dernière.

9. Actionneur selon l'une quelconque des revendications précédentes, comprenant en outre une partie de transmission (12) avec des roues dentées (28) montées à l'intérieur du boîtier (4) .

10. Actionneur selon l'une quelconque des revendications précédentes, dans lequel la partie de moteur (8) est un moteur pas à pas.

11. Actionneur selon la revendication précédente, configuré pour entraîner un mécanisme de crémaillère linéaire pour un actionneur de valve hydraulique.
